# EUROPÄISCHE PATENTSCHRIFT

(11) **EP 1 512 802 B1**
(45) Veröffentlichungstag und Bekanntmachung des Hinweises auf die Patenterteilung: **05.03.2008**
(21) Anmeldenummer: 04019798.0
(22) Anmeldetag: 20.08.2004
(51) Int. Cl.: E04B 1/94, C08K 3/34, C08J 7/04

(54) **Flammhemmfolie**
Flame-retardant foil
Feuille ignifuge

(30) Priorität: 03.09.2003 CH 15112003
(43) Veröffentlichungstag der Anmeldung: 09.03.2005
(73) Patentinhaber: Perlen Converting AG, 6035 Perlen (CH)
(72) Erfinder: Frauchiger, Ulrich, 6006 Luzern (CH)
(74) Vertreter: Irniger, Ernst

(56) Entgegenhaltungen:
- WO-A-03/027017
- DE-A- 10 022 037
- DE-A- 19 816 136
- DE-A- 19 952 040
- US-B1- 6 414 070
- US-B1- 6 479 156
- US-B1- 6 482 525

## Beschreibung

Die vorliegende Erfindung betrifft eine Folie, geeignet insbesondere für Flammhemmung, ein Verfahren zur Herstellung der Folie sowie die Verwendung der Folie.

Brände, insbesondere in Diskotheken, Theater, Restaurants oder anderen Lokalitäten, insbesondere mit temporären Dekorationen nehmen oft einen dramatischen Verlauf und führen zu zahlreichen Todesfällen und/oder verletzten Personen mit zum Teil gravierenden Brandverletzungen. Oft werden solche Brände durch unachtsamen Umgang mit Feuerzeugen, Raucherwaren oder durch unprofessionelle, elektrische Installationen mit der Gefahr von Funkenwurf ausgelöst, wobei sich die Brände aufgrund fehlender oder schlechter, flammhemmender Ausrüstung rasch verbreiten können. Wohl wird heute dem Brandschutz erhöhte Bedeutung beigemessen und durch flammhemmende Ausrüstung von Mobiliar und Einrichtungen sowie durch Anbringen von Flammschutzlackierungen bzw. flammhemmender Tapeten und Papiere kann der raschen Ausbreitung eines Brandes entgegengewirkt werden. Allerdings sind die heute verwendeten Additive in der Regel auf Octabromdiphenylether oder auf Phosphorbasis hergestellt - Materialien die aus toxikologischen und/oder umwelttechnischen Gründen nicht unbedenklich sind.

Im US Patent 6 414 070 wird eine Formulierung aus Nanokapseln bestehend aus einem Polyolefinepolymer vorgeschlagen, welche zusätzlich organisch modifizierten Ton und anorganische flammhemmende Mittel enthält. Folien und Laminate aus dem vorgeschlagenen Nanokomposit können als Flammhemmmittel verwendet werden.

Weiter beschreibt die WO03/027017 modifizierte Ton- bzw. Lehmzusammensetzungen geeignet für die Verwendung als Beschichtungen, wie beispielsweise solche mit einer erhöhten Flammresistenz. Die Beschichtungszusammensetzungen enthalten wässrige Nanokomposit-Ton- bzw. lehmpolymerdispersionen.

In der DE-100 22 037 schliesslich wird eine Infrarotabsorbierende Zusammensetzung beschrieben, enthaltend transparente, thermoplastische Polymere sowie Oberflächenmodifizierte Oxidteilchen mit einer Teilchengrösse von < 200nm und organischem NIR-Absorber.

Die Aufgabe der vorliegenden Erfindung besteht darin, Flammschutzmittel bzw. flammhemmende Einrichtungen vorzuschlagen, welche nicht toxisch sind für Menschen, Tiere und Pflanzen, und welche bei Bränden keine zusätzlichen toxischen oder korrosiven Rauchgase freisetzen, gute Recyling-Eigenschaften aufweisen bzw. umweltneutral sind.

Die erfindungsgemäss gestellte Aufgabe wird mittels der Verwendung einer Folie gemäss dem Wortlaut nach Anspruch 1 gelöst.

Vorgeschlagen wird eine Verwendung der Folie für Flammhemmung, wobei die Folie gekennzeichnet ist durch eine Trägerfolie, welche mindestens auf einer Seite eine Beschichtung aufweist, enthaltend mindestens nanoskalische Teilchen auf Basis von keramischen und/oder glasartigen und/oder metalloxidischen Werkstoffen.

Diese nanoskalischen Teilchen oder auch genannt Nanokapseln oder Nanopartikel auf Keramik-, Glas- oder Metalloxidbasis sind mittels eines anorganischen Bindemittels insbesondere geeignet für mineralische Werkstoffe, wie Glas, Keramik oder Aramidfasern auf der Trägerfolie gehalten. Beim anorganischen Bindemittel kann es sich beispielsweise um ein Bindemittel auf Basis Wasserglas handeln. Auch Silane oder Siloxane sind geeignet, wobei diese Materialien beim Binden der Nanopartikel gegebenenfalls unter Hitzewirkung aufgeschäumt werden. Die Trägerfolie besteht bevorzugt aus einem Polymeren, welches eine erhöhte Temperaturfestigkeit aufweist. Üblicherweise verwendete Polyolefine, wie Polyethylen oder Propolypropylen sind eher nicht geeignet, währenddem beispielsweise Polyesterfolien, wie beispielsweise PET-Folien durchaus verwendet werden können. Die Polymerfolie kann zusätzlich mittels Glas oder Mineralfasern verstärkt sein, was die Temperaturfestigkeit erhöht. Selbstverständlich wäre es vorteilhaft, hochtemperaturfeste Materialien zu verwenden, wie beispielsweise PTFE (Polytetrafluorethylen) oder Teflon, wobei diese Materialien aus wirtschaftlichen Gründen wohl eher nicht geeignet sind. Aber auch andere hochtemperaturfeste Materialien, wie beispielsweise Polyphenyloxid (Noryl) oder Hartpapiergewebe, wie auch Glashartgewebe, etc. können durchaus als Trägerfolien verwendet werden. Die Liste der für die Trägerfolie verwendbaren Materialien ist keinesfalls abschliessend und kann durch weitere geeignete Materialien erweitert werden, in diesem Zusammenhang zu erwähnen sind beispielsweise auch Polyimidfolien, welche aber wiederum aus ökonomischen Gründen wohl kaum in Frage kommen.

Der grosse Vorteil der Verwendung der erwähnten Nanokapseln in der Beschichtung der Trägerfolie liegt darin, dass diese eine sehr hohe Oberfläche aufweisen und sich diese Kapseln bei Hitzeinwirkung ausdehnen und damit erhebliche Energie verbrauchen bzw. vernichten. Durch das Ausdehnen der Kapseln kann somit eine erhebliche Flammhemmung bewirkt werden bzw. kann durch die Wärmevernichtung ein schnelles Ausbreiten eines Brandes verhütet werden. Wie oben erwähnt, sind die erfindungsgemäss vorgeschlagenen Nanokapseln auf keramischer Basis, wobei weitgehendst alle bekannten keramischen Materialien für die Herstellung der erwähnten Nanokapseln in Frage kommen, wie insbesondere keramische Werkstoffe, basierend auf Aluminiumoxid, Siliziumoxid, etc. Auf keramischer Basis aufgebaute Nanokapseln sind bekannt und sind auf dem Markt erhältlich, beispielsweise als sogenannte Sol-Gel-Bindemittel-Systeme, beispielsweise vom Institut Für Neue Materialien gem. GmbH in D-66123 Saarbrücke.

Als flammhemmende Partikel kommen aber nebst den vorab beschriebenen Keramikpartikel auch Partikel in Frage, welche mittels sogenannten Flammsprühverfahren hergestellt werden, wie insbesondere Partikel auf metalloxidischer Basis, wie beispielsweise Aluminiumoxinitride oder ebenfalls auf Keramik- oder Glasbasis.

Bezüglich Nanokapseln sind auch solche bekannt, welche beispielsweise mit Wasser gefüllt sind, was die Flammhemmwirkung zusätzlich erhöht.

Damit die erfindungsgemäss vorgeschlagene, Folie, beispielsweise in Form einer Tapete oder Verkleidung, angeordnet werden kann, ist auf der Rückseite der Trägerfolie ein Klebstoffmaterial bzw. ein Kleber angeordnet, wobei es sich vorzugsweise wiederum ein temperaturbeständiges, schwer brennbares Material handelt. Im Gegensatz zum Bindemittel für das Anordnen der Nanokapseln kann es sich beim Kleber auch um ein organisches Bindemittel handeln, wie beispielsweise um einen Kleber auf Melaminharzbasis, etc. Um den Kleber vor der Applikation der folienartigen Anordnung zu schützen ist dieser vorzugsweise mit einer Abdeckfolie überdeckt, wie beispielsweise einer vorzugsweise silikonisierten Abdeckfolie. Die Basis dieser silikonisierten Abdeckfolie kann irgendein geeignetes Polymer sein, wie beispielsweise auf Polyethylenbasis. Dies insbesondere deshalb, weil hier Temperaturfestigkeit und Brennbarkeit kein Thema sind, weil bei der Applikation der folienartigen Anordnung diese Abdeckfolie entfernt wird.

Für die Herstellung der erfindungsgemäss vorgeschlagenen Folie wird ein Gel verwendet, in welchem die erwähnten Nanokapseln auf Keramikbasis eingebettet sind. Die Herstellung des Gels erfolgt dabei mittels eines sogenannten Sol-Gel-Verfahrens, indem die nanoskalischen Teilchen bzw. Nanokapseln unter Zusatz geeigneter Additive so lange suspendiert werden, bis sich das erwähnte Gel gebildet hat. Die Herstellung dieses Gels ist an sich nicht Gegenstand der vorliegenden Erfindung und derartige Gele, beinhaltend Nanokapseln auf keramischer Basis, sind im Handel erhältlich. Erneut sei auf das Institut Für Neue Materialien gem. GmbH in D-66123 Saarbrücken verwiesen, welches derartige Gele mit Nanokapseln auf keramischer Basis anbietet. Die Herstellung der folienartigen Anordnung erfolgt vorzugsweise über eine Mehrkopfbeschichtungsanlage mit der Möglichkeit, eine sehr feine und gleichmässige Verteilung des Gels, in welchem die Kapseln eingebettet sind auf der Trägerfolie zu erreichen. Dies wird vor allem durch geschickte Kombination von Verteilwalzen erreicht.

In analoger Art und Weise wird der Kleber auf der Rückseite der Trägerfolie aufgebracht, wobei es sich, wie bereits oben erwähnt, vorzugsweise um einen temperaturbeständigen, schwer brennbaren Kleber handelt. Schliesslich die Lamination der silikonisierten Folie geschieht ebenfalls auf einer mit Andruckwalzen und einem Trocknersystem versehenen Anlage.

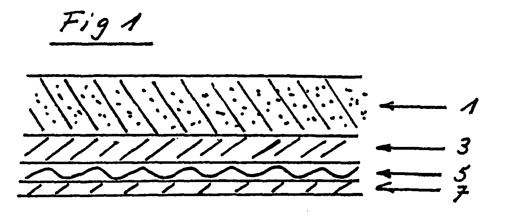

Ein Beispiel einer erfindungsgemässen Folie ist in der beigefügten Figur im Querschnitt dargestellt.

Auf einer Trägerfolie 3, beispielsweise bestehend aus Polyester wie PET, welche eine Schichtdicke von beispielsweise zwischen 20 und 30µ aufweisen kann ist eine flammhemmende bzw. wärmedämpfende Schicht 1 aufgebracht, enthaltend Nanokapseln auf keramischer Basis, welche in einem anorganischen, vorzugsweise transparenten Bindemittel bzw. Kleber eingebettet sind. Wie bereits oben erwähnt, kann es sich beim Bindemittel um ein solches auf Basis Wasserglas handeln. Die Nanokapseln basieren auf irgendeinem geeigneten, keramischen Material, wie beispielsweise auf Basis Aluminiumoxid, Siliziumoxid, irgendwelchen Metallkarbiden, Oxiden, etc., wobei die Nanokapseln gegebenenfalls auch eine gewisse Feuchtigkeit aufweisen können bzw. sogenannt wassergefüllt ausgebildet sind. Da die mit den Nanokapseln gefüllte Beschichtung, insbesondere beim Entfalten der Flammhemmung bzw. Wärmedämpfung, welche sich durch Ausdehnung der Kapseln bei Hitzewirkung einstellt, eine möglichst hohe Hitzefestigkeit aufweisen soll ist es wesentlich, dass das für das Einbetten der Nanokapseln verwendete Bindemittel ebenfalls über eine hohe Hitzebeständigkeit verfügt. Aus diesem Grunde ist die Verwendung eines Bindemittels auf Basis von Wasserglas bzw. Kieselsäure bevorzugt.

Die verwendeten Nanokapseln weisen eine Grösse von beispielsweise 5 bis 20nm auf, und die Dosierung der Beschichtung kann unterschiedlich sein, je nach dem wie gross der Grad der Brandhemmung sein soll. Ein typischer Wert ist beispielsweise 5 gms 9/m², wobei selbstverständlich die Dosierung höher bzw. geringer gewählt werden kann.

Auf der Rückseite der Trägerfolie 3 ist ein Kleber 5 angeordnet, welcher hochtemperaturfest und schwer brennbar sein soll. Geeignet sind beispielsweise nebst anorganischen Klebern auch Klebstoffe auf Menaminharzbasis. Selbstverständlich können auch andere Kleber verwendet werden, welche über die erwähnten Eigenschaften verfügen. Geeignet sind beispielsweise wiederum Kleber auf Wasserglasbasis oder Silikonkleber.

Schliesslich als Schutz der Klebeschicht 5 ist eine silikonisierte Abdeckfolie 7 angeordnet, bei welcher es sich beispielsweise um eine Polyethylenfolie handeln kann. Auch die Schichtdicke dieser Abdeckfolie kann unterschiedlich gewählt werden, ein typischer Wert ist beispielsweise 40µ.

Gemäss einer weiteren Ausführungsvariante ist es möglich, gleichzeitig mit der Beschichtung der Folie mit den Nanokapseln ein Alarmsystem einzubringen, welches z.B. auf einem neanderförmig eingelegten, leitenden, feinen Faden beruht, der durch die extreme Ausdehnung der Partikel infolge Hitzeeinwirkung unterbrochen wird. Die Unterbrechung eines Stromkreises infolge der Beschädigung des feinen Fadens kann beispielsweise ein Alarm ausgelöst werden, der auf eine ausserordentliche Hitzeeinwirkung hindeutet. So kann in diesem Fall beispielsweise über einen elektronischen Alarmvermittler in einem frühen Brandstadium alarmiert werden, und die Rettungsmassnahmen können so rechtzeitig eingeleitet bzw. massiv erleichtert werden. Beim leitenden Faden kann es sich beispielsweise um einen Metallfaden handeln oder aber auch um ein anderes, geeignetes Material, beispielsweise auf Basis auf leitenden Kohlenstofffasern, etc. Wesentlich ist, dass das Material unter Hitzeeinwirkung bzw. durch die extreme Ausdehnung der Nanopartikel beschädigt wird, und andererseits eine gute elektrische Leitfähigkeit aufweist.

Die erfindungsgemäss vorgeschlagene Flammhemmfolie kann nun beispielsweise im Sinne einer Tapete verwendet werden, um die Wände eines Raumes gegen Brandausdehnung zu schützen. Selbstverständlich können auch nur einzelne speziell zu sichernde Wände oder besonderen Risiken ausgesetzte Stellen mit der Flammhemmfolie geschützt werden, oder irgendwelche Gegenstände, welche zumindest im Sinne einer Verzögerung gegen das Ausbreiten eines Feuers zu schützen sind. Wesentlich ist, dass vor dem Anbringen der Flammhemmfolie der Untergrund entsprechend gereinigt wird, worauf die silikonisierte Abdeckfolie entfernt und die Flammhemmfolie auf dem Untergrund aufgebracht wird. Wie bereits oben erwähnt, können je nach den Anforderungen unterschiedliche Flammhemmfolien verwendet werden, versehen mit unterschiedlicher Dosierung der Nanokapseln. Falls notwendig können auch zwei Folien, enthaltend die Nanokapseln, übereinander aufgebracht werden. Die Hemmschwelle wird dadurch zwar nicht verdoppelt jedoch substantiell erhöht.

Die vorliegende Erfindung ist selbstverständlich keinesfalls auf das unter Bezug der Figur beschriebene Beispiel beschränkt, sondern grundsätzlich kann die Folie entsprechend den Anforderungen modifiziert oder durch weitere Schichten ergänzt werden. Wesentlich ist, dass die auf einer Trägerfolie angeordnete Beschichtung Nanokapseln auf keramischer oder metalloxidischer Basis enthält, welche sich bei Hitzeinwirkung ausdehnen und so Energie absorbieren und eine Flammhemmung bewirken bzw. eine Verzögerung der Wärmeentwicklung.

## Patentansprüche

1. Verwendung einer Folie als Flammhemmfolie mit einer Trägerfolie, mindestens aufweisend eine flammhemmende Beschichtung, **dadurch gekennzeichnet, dass** die Beschichtung nanoskalische Teilchen bzw. Nanokapseln auf Basis von keramischen und/oder glasartigen Werkstoffen und/oder auf Basis von metalloxidischen Werkstoffen enthält, und dass die Trägerfolie auf der, der Beschichtung gegenüberliegenden Seite einen Kleber (5) aufweist.

2. Verwendung nach Anspruch 1, **dadurch gekennzeichnet, dass** die nanoskalischen Teilchen bzw. Nanokapseln auf Keramik-, Glas- oder Metalloxidbasis mittels eines anorganischen Bindemittels, insbesondere geeignet für mineralische Werkstoffe, auf der Trägerfolie gehalten werden.

3. Verwendung nach Anspruch 2, **dadurch gekennzeichnet, dass** das Bindemittel auf Basis Wasserglas hergestellt ist.

4. Verwendung nach Anspruch 2, **dadurch gekennzeichnet, dass** als Bindemittel Silane oder Siloxane verwendet werden.

5. Verwendung nach einem der Ansprüche 1 bis 4, **dadurch gekennzeichnet, dass** die Trägerfolie eine Polymerfolie ist beispielsweise auf Basis Polyester, wie auf Basis PET.

6. Verwendung nach einem der Ansprüche 1 bis 5, **dadurch gekennzeichnet, dass** die nanoskalischen Teilchen bzw. Nanokapseln eine gewisse Feuchtigkeit aufweisen bzw. mit Wasser gefüllt sind.

7. Verwendung nach einem der Ansprüche 1 bis 6, **dadurch gekennzeichnet, dass** die Trägerfolie auf der der Beschichtung gegenüberliegenden Seite einen Kleber (5) aufweist, welcher eine hohe Temperaturbeständigkeit aufweist, sowie schwer brennbar ist.

8. Verwendung nach einem der Ansprüche 1 bis 7, **dadurch gekennzeichnet, dass** der Kleber mittels einer silikonisierten Polymerfolie (7) überdeckt ist.

9. Verwendung nach einem der Ansprüche 1 bis 8, **dadurch gekennzeichnet, dass** mindestens eine Beschichtung vorgesehen ist, vorzugsweise die Beschichtung enthaltend nanoskalische Teilchen bzw. Nanokapseln, mit Mitteln versehen ist bilden einen geschlossenen elektrischen Kreis, wobei die Mittel unter Hitzeeinwirkung bzw. Ausdehnung der Nanopartikel derart beschädigt werden, dass der elektrische Kreis unterbrochen wird, und weiter Alarmmittel vorgesehen sind, welche bei Unterbrechung des Stromkreises auslösbar sind.

10. Verwendung nach Anspruch 9, **dadurch gekennzeichnet, dass** in der mindestens einen Schicht ein elektrisch leitender feiner Faden, vorzugsweise neanderförmig, angeordnet ist, welcher durch Hitzeeinwirkung und/oder Ausdehnung der Nanopartikel derart beschädigt wird, dass der Stromkreis unterbrochen wird.

11. Verfahren zur Herstellung einer Folie gemäss der Verwendung nach einem der Ansprüche 1 bis 10, **dadurch gekennzeichnet, dass** ein Gel, enthaltend die Nanokapseln, mittels einer Mehrkopfbeschichtungsanlage auf die Trägerfolie aufgebracht und mittels mindestens einer Verteilwalze weitgehendst gleichmässig verteilt wird.

12. Folie definiert nach einem der Ansprüche 1 bis 10 als Wandverkleidung, Tapete, Deckenverkleidung, etc. für das Flammhemmausrüsten bzw. als Brandverzögerungsschutz in Räumen bzw. Zimmern.

13. Folie nach einem der Ansprüche 1 bis 10 für das Brandhemmausrüsten von Diskotheken, Theatern, Restaurants und anderen öffentlichen Lokalitäten.

## Claims

1. Use of a film as flame retardant film with a carrier film, at least comprising a flame retardant coating, **characterized in that** the coating contains nanoscalar particles or nanocapsules respectively based on ceramic and/or glass like materials and/or based upon metal oxidic materials and **in that** the carrier film on the side opposite to the coating comprises an adhesive (5).

2. Use according claim 1, **characterized in that** the nanoscalar particles or nanocapsules respectively based upon ceramic, glass or metaloxides is hold on the carrier film by means of an inorganic binder, in particular suitable for mineral materials.

3. Use according claim 2, **characterized in that** the binder is produced on the basis of sodium silicate.

4. Use according claim 2, **characterized in that** as binder hydrosilicones or siloxanes are used.

5. Use according to one of the claims 1 to 4, **characterized in that** the carrier film is a polymer film, based for example on a polyester such as based upon PET.

6. Use according to one of the claims 1 to 5, **characterized in that** the nanoscalar particles or nanocapsules comprise a certain humidity or are filled with water respectively.

7. Use according to one of the claims 1 to 6, **characterized in that** the carrier film has an adhesive (5) on the side opposite to the coating which has a high temperature resistance and in addition which is hardly flammable.

8. Use according to one of the claims 1 to 7, **characterized in that** the adhesive is covered by means of a siliconized polymer film (7).

9. Use according to one of the claims 1 to 8, **characterized in that** at least one coating is provided preferably the coating containing the nanoscalar particles or nanocapsules respectively with means for creating a closed electric circuit, the means being damaged due to the influence of heat or the enlargement of the nanoparticles such that the electric circuit is disconnected and further means to create an alarm are provided, which will be activated due to the disconnection of the current circuit.

10. Use according claim 9, **characterized in that** within the at least one coating an electric conductive fine filament is provided preferably in the form of a neander which under the influence of heat and/or the enlargement of the nanoparticles is damaged such that the current circuit is interrupted.

11. Process for the production of a film according the use of one of the claims 1 to 10, **characterized in that** a gel containing the nanocapsules is applied onto the carrier film by means of a multiple head coating installation and which is distributed uniformly to a large extend by means of a repartition cylinder.

12. Film defined according to one of the claims 1 to 10 as wall covering, wallpaper, sealing covering, etc. for the flame retardant furnishing or as burning delaying protection in rooms or accommodations respectively.

13. Film defined according to one of the claims 1 to 10 for the flame retardant furnishing of discotheques, theatres, restaurants and other public localities.

## Revendications

1. Utilisation d'une feuille comme feuille retardant de flamme, avec une feuille support, comprenant au moins un revêtement retardant de flamme, **caractérisée en ce que** ledit revêtement contient des particules nanoscaliques ou des nanocapsules respectivement à base de matières céramiques et/ou vitreuses et/ou à base de matières oxyde-métalliques et **en ce que** la feuille support est munie d'un adhésif (5) sur la face opposite à celle portant ledit revêtement.

2. Utilisation selon la revendication 1, **caractérisée en ce que** lesdites particules nanoscaliques ou lesdites nanocapsules à base de céramique, verre ou oxyde métallique sont retenues sur la feuille support au moyen d'un liant anorganique, notamment utilisable pour des matières minérales.

3. Utilisation selon la revendication 2, **caractérisée en ce que** ledit liant est préparé à base de silicate de sodium.

4. Utilisation selon la revendication 2, **caractérisée en ce que** l'on utilise comme liant de la silane ou de la siloxane.

5. Utilisation selon l'une des revendications 1 à 4, **caractérisée en ce que** la feuille support est une feuille en polymère, par exemple à base de polyester, comme à base de PET.

6. Utilisation selon l'une des revendications 1 à 5, **caractérisée en ce que** les particules nanoscaliques respectivement les nanocapsules présentent une humidité donnée ou sont remplies d'eau.

7. Utilisation selon l'une des revendications 1 à 6, **caractérisée en ce que** la feuille support présente sur sa face opposite celle avec le revêtement un adhésif ayant une grande résistance à la température et qui est peu inflammable.

8. Utilisation selon l'une des revendications 1 à 7, **caractérisée en ce que** l'adhésif est recouvert par une feuille polymère (7) siliconisée.

9. Utilisation selon l'une des revendications 1 à 8, **caractérisée en ce qu'**au moins un revêtement est prévu, de préférence le revêtement contentant des particules nanoscaliques respectivement des nanocapsules et est muni de moyens formant un circuit électrique fermé, lesdits moyens étant endommagés sous l'influence de chaleur ou par l'expansion des nanoparticules de telle manière, que ledit circuit électrique soit interrompu et en outre par des éléments d'alarme qui sont déclenchés lors de l'interruption de circuit électrique.

10. Utilisation selon la revendication 9, **caractérisée par** un fil fin conducteur d'électricité dans ladite au moins une couche de revêtement, de préférence disposé en forme de méandre, qui est endommagé sous l'influence de chaleur et/ou par l'expansion des nanoparticules de telle manière que le circuit électrique soit interrompu.

11. Procédé de fabrication d'une feuille suivant l'utilisation selon l'une des revendications 1 à 10, **caractérisé en ce que** l'on applique un gel contenant les nanocapsules sur la feuille support au moyen d'une installation de revêtement à têtes multiples et par la répartition uniforme du gel au moyen d'au moins un cylindre de répartition.

12. Feuille définie selon l'une des revendications 1 à 10, utilisable comme revêtement d'un mur, de tapisserie, de revêtement de plafond etc. pour apprêter contre les flammes ou comme protection anti-flammes dans des salles ou des chambres.

13. Feuille selon l'une des revendications 1 à 10 pour apprêter contre des flammes des discothèques, théâtres, restaurants ou autres localités publiques.
